# EUROPEAN PATENT APPLICATION

(11) **EP 4 674 903 A1**
(43) Date of publication of application: **07.01.2026**
(21) Application number: 24306128.0
(22) Date of filing: 05.07.2024
(51) Int. Cl.: C08J 11/24

(54) **METHOD OF RECYCLING COMPOSITIONS COMPRISING POLYESTER AND CELLULOSE-CONTAINING FIBERS**

(71) Applicant: Reju, 92000 Nanterre (FR)
(72) Inventor: Schwarz, Raimund, 92000 Nanterre Cedex (FR); Hackel, Marius, 92000 Nanterre Cedex (FR); Sundermann, Michel, 92000 Nanterre Cedex (FR); Betton, Fabrice, 92000 Nanterre Cedex (FR)
(74) Representative: Edson, Russell Gregory

(57) **Abstract**

There is provided a method of recycling polyester and cellulose-containing fibers, the method comprising mechanically treating a composition comprising polyester, such as PET, cellulose-containing fibers, such as polycotton, and ethylene glycol, depolymerizing the polyester in the composition and optionally separating the depolymerized polyester product and cellulose-containing fibers and recycling them, as well as providing compositions and articles comprising recycled compositions obtainable by said method.

## Description

### Field of the Invention

The present invention relates to methods of recycling compositions comprising blends of polyester and cellulose-containing fibers, such as polycotton. In particular, the present invention relates to a method of depolymerizing polyester within said compositions and separating the depolymerized polyester and cellulose-containing fibers, such as cotton, so that both can then be reused i.e., they are recycled. The present invention also relates to compositions and articles comprising compositions obtainable by said methods.

### Background of the Invention

Recycling of materials is useful since recycling typically uses less energy than extracting, processing and transporting fresh raw material to make new products. Recycling also helps to, amongst other things, reduce the amount of waste that is sent to landfill or otherwise disposed, reduces emissions of pollutants, preserves precious natural resources, and generally causes less harm to the environment and animals than using fresh raw materials. Recycling is continuing to become more important.

However, identifying economical and efficient ways of recycling materials such as textiles has proven to be difficult. This is at least in part due to the fact that textiles are a mixture of materials, which makes recycling difficult due to the different properties of the mixture of materials. Typically, recycling conditions and methods suitable for some of the materials within the textile may damage or even destroy some or all of the remaining materials within the textile. In particular, recycling textile materials such as polycotton, which is a mixture of polyester and cotton, has proven to be challenging as most attempts end up resulting in the destruction of either the polyester or the cotton.

Methods have been identified to recycle polyester, such as in WO 2021/122095 A, which describes a method of recycling polyester through a depolymerization process. The process comprises processing the feed in an extruder, followed by a static mixer and then a depolymerization reactor. However, said process is not compatible for processing compositions comprising polyester and cellulose-containing fibers since the process would damage or destroy the cellulose-containing fibers and a static mixer is not suitable for processing cellulose-containing fibers, such as cotton, since it would quickly clog with the cotton. Therefore, it is described in this document that any cotton fibers are removed in a pretreatment step before being processed in the process of the document.

Methods have been previously identified that enable the separation of polyester and cotton from polycotton so that they can be recycled. These include US 2020/0407530 A which discloses a method for recycling cotton and polyester fibers from waste textiles in a subcritical water reactor. Amongst other disadvantages, this process is a batch process which is not suitable for industrial scale production. WO 2020/013755 A discloses a process for separating the cellulosic part from a raw material composition comprising polyester and cellulose containing composition by treating the composition with a hydrolyzing liquor comprising an alkaline solution of hydroxide ions. This process uses a hydrolyzing agent which results in a complicated process and the hydrolysis process produces terephthalic acid and a lot of ethylene glycol at the end the process which causes the process to be considerably more expensive. Conventional methods of recycling polyester, such as described in WO 2021/122095 A and described already herein, use high temperatures which would usually destroy or damage any cotton present, thus preventing recycling of polycotton mixtures using conventional polyester recycling methods.

A further issue with existing methods of recycling polycotton, and other polyester and cellulose-containing fiber mixtures, is that they are not suitable for industrial, large-scale production or economically viable. In particular, fresh polyester (such as PET i.e., polyethylene terephthalate) is relatively cheap to obtain, meaning that any process of recycling it must be economically efficient.

In view of the shortcomings in the existing methods, most textile waste is still either incinerated or landfilled. It would therefore be useful to have improved methods of recycling textile waste, such as polycotton, in order for the recycled materials to be used in new articles, such as new textiles, the method being economical and efficient. This has been achieved substantially by identifying ways in which existing methods of recycling polyester only can be modified in order to be able to co-process polyester and cellulose-containing fibers, meaning that only minor modifications to existing hardware and apparatuses are required. In particular, the methods of the present invention enable the cellulose-containing fibers, such as cotton, to be separated and preserved to such an extent that they can be returned to the value chain by means of, for example, mechanical or chemical processing.

### Summary of the Invention

The present invention is as described according to the following embodiments.
1. A method comprising:
   providing a composition comprising polyester and cellulose-containing fibers;
   adding ethylene glycol to the composition;
   mechanically treating the composition comprising polyester, cellulose-containing fibers and ethylene glycol;
   depolymerizing the polyester in the at least partially mechanically treated composition comprising adding a depolymerizing agent to produce a composition which comprises a depolymerized polyester product and cellulose-containing fibers; and
   preferably separating in a separation unit the depolymerized polyester product from the cellulose-containing fibers.
2. The method of embodiment 1, further comprising a step of pre-treating the composition before mechanically treating the composition, including reacting the composition with a cleaning agent, preferably under one or more of the following conditions:
   a temperature of about 100 to about 180 °C;
   a pressure of up to about 1 MPa;
   a residence time of about 30 seconds to about 10 minutes when pre-treated at about 155 to about 170 °C;
   a residence time of about 4 to about 10 minutes when pre-treated at about 130 to about 150 °C; and
   a residence time of about 15 to about 45 minutes when pre-treated at about 100 to about 125 °C.
3. The method of embodiment 2, wherein the pre-treating step further comprises adding ethylene glycol to the composition and removing the cleaning agent from the composition such that at least some of the ethylene glycol remains in the composition.
4. The method of any of embodiments 2 and 3, further comprising a step of mechanically cleaning or sorting the composition prior to pre-treating the composition.
5. The method of any preceding embodiment, wherein adding ethylene glycol takes place at least while mechanically treating the composition, preferably in addition to adding ethylene glycol to the composition prior to the mechanically treating step.
6. The method of any preceding embodiment, wherein the composition fed to the mechanically treating step comprises an ethylene glycol:polyester weight ratio of about 0.1:1 to about 0.7:1, preferably about 0.2:1 to about 0.4:1.
7. The method of any preceding embodiment, wherein mechanically treating the composition comprises extruding the composition in an extruder.
8. The method of embodiment 7, further comprising adding ethylene glycol to the composition at a plurality of places along the extruder.
9. The method of embodiment 8, comprising adding ethylene glycol at one or more places upstream in the extruder so that the ethylene glycol content is about 0.2:1 to about 2:1 relative to the amount of feed polyester on a weight basis and adding ethylene glycol at one or more places downstream in the extruder so that the ethylene glycol content is about 4:1 to about 5:1 relative to the amount of feed polyester on a weight basis.
10. The method of any of embodiments 7 to 9, further comprising heating the composition upstream in the extruder to a first temperature, preferably of about 130 to about 170 °C, and subsequently heating the composition downstream in the extruder to a second temperature which is higher than the first temperature, preferably of about 200 to about 280 °C.
11. The method of embodiment 10, wherein the composition is cooled further downstream in the extruder to a third temperature, higher than the first temperature and lower than the second temperature, preferably of about 190 to about 230 °C.
12. The method of any of embodiments 1 to 6, further comprising mechanically treating the composition in a masher.
13. The method of any preceding embodiment, wherein depolymerizing comprises partially or completely depolymerizing the polyester by adding depolymerizing agent while mechanically treating the composition.
14. The method of any preceding embodiment, wherein depolymerizing comprises depolymerizing the polyester by adding depolymerizing agent in a depolymerization reactor after mechanically treating the composition, preferably wherein the depolymerization reactor is a plug flow reactor.
15. The method of embodiment 14, wherein depolymerizing in the depolymerization reactor comprises one or more of the following:
   depolymerizing in the reactor for a time of between about 1 to about 20 minutes;
   depolymerizing in the reactor at a pressure of about 600 to about 1000 kPa; and
   depolymerizing at a temperature of about 170 to about 240 °C.
16. The method of any preceding embodiment, wherein the depolymerizing agent comprises an alcohol, preferably wherein the alcohol is selected from the group consisting of ethylene glycol, polyethylene glycol (PEG), 1,3-propanediol (trimethylene glycol), 1,4-butanediol (tetramethylene glycol), 1,5-pentanediol (pentylene glycol) and combinations thereof, further preferably wherein the depolymerizing agent comprises additionally added ethylene glycol.
17. The method of any preceding embodiment, wherein the depolymerizing agent comprises a depolymerization catalyst, preferably wherein the catalyst is selected from an amine organocatalyst, preferably wherein the amine organocatalyst is selected from the group consisting of tetramethylenediamine (TMEDA), pentamethyldiethylenetriamine (PMDETA), trimethyl triaza cyclononane (TACN), trialkylamine, 4-(N,N-dimethylamino)pyridine (DMAP), 1,4-diazabicyclo (2,2,2)octane (DABCO), N-methyl imidazole (NMI), and combinations thereof.
18. The method of any preceding embodiment, further comprising separating the depolymerized polyester product from the cellulose-containing fibers in a plug screw separator, preferably wherein the operating pressure of the plug screw separator is lower than the feed pressure.
19. The method of any preceding embodiment, further comprising a step of returning a stream containing ethylene glycol from downstream to one or more of the mechanical treatment, depolymerization, and pre-treatment cleaning steps, preferably comprising an inner return stream directly from the separating unit and an outer return stream from further downstream, preferably wherein at least one of the return streams further comprise bis(2-hydroxyethyl)terephthalate (BHET).
20. The method of any preceding embodiment, further comprising purifying either or both the separated depolymerized polyester product and cellulose-containing fibers.
21. The method of any preceding embodiment, further comprising polymerizing the depolymerized polyester product to a polyester product.
22. The method of any preceding embodiment, wherein the method is performed continuously.
23. The method of any preceding embodiment, wherein the method is performed in oxygen-free conditions, preferably under a nitrogen atmosphere.
24. The method of any preceding embodiment, wherein the cellulose-containing fibers are natural fibers, preferably cotton.
25. The method of any preceding embodiment, wherein the polyester is selected from the group consisting of poly(ethyleneterephthalate) (PET), poly(butylene terephthalate) (PBT), polytrimethylene terephthalate (PTI), polyethylene naphthalate (PEN), polyethylene furanoate (PEF), and combinations thereof, preferably wherein the polyester is poly(ethyleneterephthalate) (PET).
26. The method of any preceding embodiment, wherein the depolymerized polyester product comprises monomers and/or oligomers of the polyester, preferably one or more of bis(2-hydroxyethyl)terephthalate (BHET) and 2-Hydroxyethyl terephthalic acid (MHET).
27. The method of any preceding embodiment, wherein the polyester is poly(ethyleneterephthalate) (PET) and the depolymerizing agent comprises additionally added 1,2-ethanediol (ethylene glycol) and catalyst, and the depolymerized polyester product comprises bis(2-hydroxyethyl)terephthalate (BHET).
28. A method of preparing a composition comprising depolymerized polyester and/or cellulose-containing fibers, wherein the method comprises the steps of any of embodiments 1 to 17 and 22 to 27.
29. A method of preparing recycled polyester and/or recycled cellulose-containing fibers, wherein the method comprises the steps of any of embodiments 1 to 27.
30. A method of manufacturing an article, wherein the method comprises:
   obtaining recycled polyester according to the method of embodiment 29; and
   manufacturing an article comprising the recycled polyester, preferably wherein the article is selected from clothing, textiles, films, foils and bottles.
31. A method of manufacturing an article, wherein the method comprises:
   obtaining recycled cellulose-containing fibers, preferably cotton, according to the method of embodiment 29; and
   manufacturing an article comprising the cellulose-containing fibers, preferably cotton, further preferably wherein the article is selected from clothing, non-woven items for hygiene, wipes, interlinings.
32. A composition comprising depolymerized polyester, preferably bis(2-hydroxyethyl)terephthalate (BHET), and cellulose-containing fibers, preferably cotton, obtainable by the method of any of embodiments 1 to 17 and 22 to 28.
33. Recycled polyester obtainable according to the method of any of embodiments 1 to 29.
34. Cellulose-containing fibers, preferably cotton, obtainable according to the method of any of embodiments 1 to 29.
35. Use of recycled polyester according to embodiment 33 in the manufacturing of an article, preferably wherein the article is selected from clothing, textiles, films, foils and bottles.
36. Use of cellulose-containing fibers according to embodiment 34 in the manufacturing of an article, preferably wherein the article is selected from clothing, non-woven items for hygiene, wipes, interlinings.

### Brief Description of the Drawings

Certain embodiments of the present invention are shown in the accompanying drawing and hereinafter described in detail.

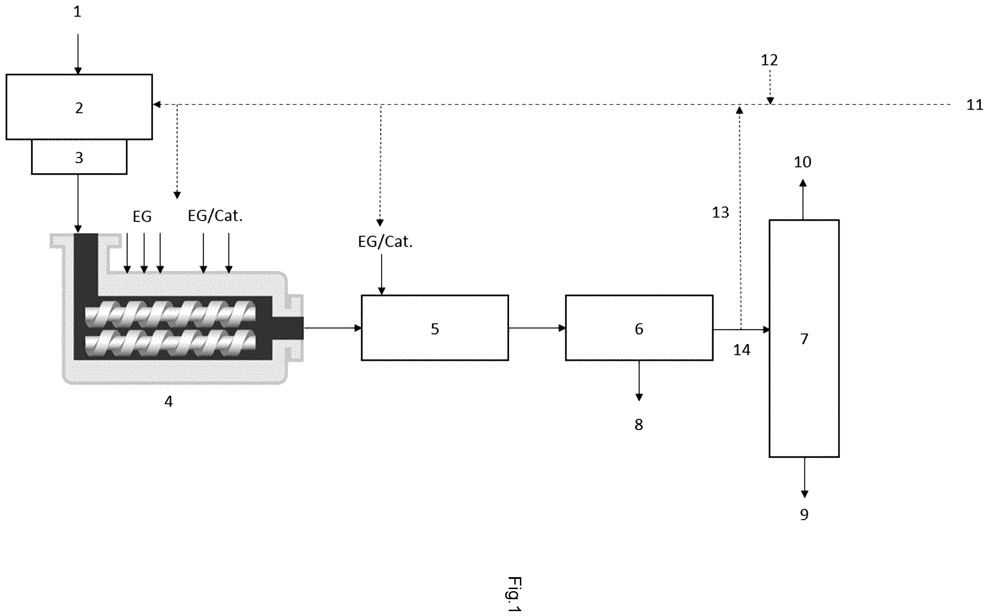

Figure 1 shows a specific example of the process of the present invention.

### Detailed Description

The method of the invention and described herein generally relate to processing polyester and cellulose-containing fibers, separating the polyester and cellulose-containing fibers, and enabling the two components to be recycled. The method of the invention (which may also be referred to as a process), in certain embodiments relates to a method of any of the following:
recycling a textile material comprising polyester and cellulose containing-fibers, for example polycotton;
recycling a composition comprising cellulose-containing fibers and polyester;
processing a composition comprising cellulose containing fibers and polyester;
depolymerizing polyester in a composition comprising cellulose containing fibers and the polyester;
separating polyester and cellulose-containing fibers in a composition;
preparing a composition comprising depolymerized polyester and/or cellulose containing fibers; and
preparing recycled polyester and/or recycled cellulose-containing fibers.

Preferably, some or all of the process steps of the present invention are performed continuously (in a continuous manner). In certain embodiments, the process runs in continuous loops. It may take a number of runs or loops before the system preferably becomes self-regulating, other than for the repeated addition of fresh feed of polyester and cellulose-containing fibers (i.e., polycotton), fresh ethylene glycol and optionally depolymerization catalyst. In certain embodiments, the system becomes self-regulating in this respect after at least 5 loops/runs, or at least 7 loops/runs. Alternatively, it is also possible to carry out the process of the present invention in a batch process or a number of batch process steps.

Preferably, some or all of the process steps are performed in an oxygen free or substantially oxygen free environment. Oxygen free environment means less than about 0.1 wt.% of oxygen in, for example, nitrogen. Preferably, a nitrogen atmosphere is used instead.

Figure 1 herein shows a general exemplary embodiment of the present invention. As shown in Figure 1, an initial feed 1 is provided comprising polyester and cellulose-containing fibers, such as polycotton in this particular example which comprises, contains or consists of poly(ethyleneterephthalate) (PET) and cotton, such as from a used textile such as a used item of clothing. The polycotton may have been previously mechanically or chemically processed in order to remove components of the polycotton other than the polyester and cotton. Typically, the polycotton comprises about 65 wt% polyester and 35 wt% cotton. The polycotton is chemically treated with one or more suitable cleaning agents in a pre-treatment cleaning unit 2. This chemical pre-treatment is carried out at elevated temperatures and pressures such as 100 to 180 °C and a pressure of up to about 10 bar. The conditions will depend upon the amount and type of cleaning which is required based on the condition of the obtained polycotton. The residence type ranges from 30 seconds to 45 minutes depending on the temperature and pressure conditions used. There may also be a mechanical pre-treatment, not shown in Figure 1, to remove physical impurities such as zippers, buttons etc. The cleaned polycotton mixture comprising cleaning agent is then passed to a separation unit 3, in this example a slurry distillation column, and ethylene glycol is added to the mixture. In the slurry distribution column, the cleaning agent and impurities are removed from the cleaned polycotton by distillation. While a portion of the ethylene glycol is also removed, some residual ethylene glycol will remain in the mixture, which serves to wet i.e., partially soak the cotton. The mixture of cleaned polycotton and ethylene glycol is then fed to a mechanical treatment unit 4, in this example an extruder, typically via the top of the extruder as a part of the main feed but also alternatively by means of an extruder side feeder. In the extruder, additional ethylene glycol is added at various places along the extruder. Upstream in the extruder, only ethylene glycol is added. Downstream, ethylene glycol is added as well as a depolymerization catalyst. Upstream, up to about 20 wt% of the total ethylene glycol content is added, and is controlled to avoid breaking the extruder melt seal but to ensure that sufficiently low shear forces can be used to avoid burning the cotton. Downstream in the extruder, up to about 50 wt% of the total ethylene glycol content is added, as well as depolymerization catalyst. In the extruder, the composition is heated initially upstream to a temperature of about 130 to 170 °C and then heated further downstream in the extruder to a higher temperature of 200 to 280 °C, before being cooled towards the end of the extruder to a temperature of about 190 to 230 °C. From the extruder, the composition is fed to a depolymerization reactor 5, such as a plug flow reactor. The composition fed to the depolymerization reactor 5 will contain ethylene glycol, depolymerization catalyst, polycotton and some amounts of depolymerized polyester (e.g., oligomers and monomers, but mainly oligomers due to the weak depolymerization conditions present in the downstream portion of the extruder). The remaining ethylene glycol content is added here, together with depolymerization catalyst. The depolymerization unit is operated under conditions sufficient to depolymerize the polyester through a glycolysis reaction, such as for a time of about 1 to 20 minutes, under a pressure of about 300 to 1200 kPa, preferably 400 to 1000 kPa, most preferably 600 to 800 kPa, and a temperature of about 170 to 240 °C. The depolymerized product and other material is then fed to a separation unit 6, in this case a plug screw separator, where the cotton and depolymerized polyester product are separated. The separated cotton 8 is removed from the unit and can then be subject to various post-treatment steps, such as known purification and cleaning steps, in order to prepare the cotton for further use. The depolymerized polyester product and other material is subsequently fed to separation column 7 which separates the depolymerization catalyst 10, which can be recovered and reused and the downstream depolymerate 9 leaves the bottom of the column, and can be further treated downstream in order to purify and clean the depolymerized polyester product to prepare it for further use (e.g., cleaning steps to remove impurities, solid/liquid separation treatment, drying steps etc.). Ethylene glycol 11 can be recovered from downstream in the process to be returned to the pre-treatment cleaning unit 2, mechanical treatment unit 4 and/or depolymerization reactor 5 and be recycled. This recycle line is typically referred to herein as the outer recycle line. Fresh ethylene glycol 12 can be added when and if necessary. Furthermore, ethylene glycol can be recovered directly after the separation unit 6, via recycle line 13. This recycle line is typically referred to herein as the inner recycle line. Thus at 14, the polyester/depolymerized polyester product stream is separated into an inner return stream, which is recycled via recycle line 13, and typically contains ethylene glycol in an amount of about 4:1 relative to the amount of polyester (PET) contained in the feed fed into the process (i.e., 4 times the wt% of initially fed polyester), while an ethylene glycol light stream is sent to column 7 and typically contains ethylene glycol also in an amount of about 4:1 relative to the amount of polyester (PET) contained in the initial feed fed into the process (i.e., 4 times the wt% of initially fed polyester). These recycle lines enable a more efficient process by avoiding unnecessary loss of ethylene glycol and other components.

### Mixture of polyester and cellulose-containing fibers

Prior to the process of the present invention, a mixture of polyester and cellulose-containing fibers is obtained. Any form of mixture is envisaged, although preferably the polyester and cellulose-containing fibers are provided in the form of a material, such as a textile material or having been obtained from a textile material, such as an item of clothing, although any other form of textile would also be possible. The textile material can be mechanically and or chemically processed prior to being obtained and used in the present process in accordance with methods known in the art to remove components other than the polyester and cellulose-containing fibers (or also as initial steps of the present process). Said mechanical processing may involve mechanical processing by any suitable machines to remove hard textile pieces, such as buttons, zips and zippers. Said chemical processing may involve treatment with solvents to remove dyes, PFAS (per- and polyfluoroalkyl substances) and the like. Any form of processing, however, is envisaged as being possible to remove unwanted impurities and/or any other component of the textile other than the polyester and cellulose-containing fibers. As a result of this processing the polyester and cellulose-containing fibers may be provided to the process of the present invention in various forms.

Preferably the obtained mix of polyester and cellulose-containing fibers comprises polyester and cellulose-containing fibers in an amount of at least 70 wt%, preferably at least 75 wt%, preferably at least 80 wt%, preferably at least 85 wt%, preferably at least 90 wt%, preferably at least 95 wt%, preferably at least 99 wt%. In certain embodiments, the obtained material, composition, mixture or mix consists essentially of polyester and cellulose-containing fibers.

The polyester may be any polyester, such as any polyester found in textiles. In certain embodiments, the polyester is selected from one or more of polyethylene tetrephthalate (PET), poly(butylene terephthalate) (PBT), polytrimethylene terephthalate (PTI), polyethylene naphthalate (PEN), polyethylene furanoate (PEF), and combinations thereof, preferably poly(ethyleneterephthalate) (PET). Preferably, the polyester is polyethylene terephthalate (PET). In certain embodiments, the polyester is PET but residual amounts of other polyesters will also be present.

The cellulose-containing fibers refer to any fibers which comprise cellulose. Preferably the fibers are cellulose-based fibers such as natural fibers e.g. cotton, linen, wood fibers, cellulose, chemical pulp fibers, mechanical pulp fibers and synthetic cellulose fibers e.g. viscose, cellulose derivatives, regenerated cellulose. The fibers may be natural, synthetic and regenerated fibers. One or more type of cellulose-containing fibers may be present. Alternatively, the fibers may be described as a cellulose-containing composition or cellulose-containing material.

In certain embodiments, the mix of polyester and cellulose-containing fibers is a textile material comprising polyester and cellulose-containing fibers. In certain embodiments, the textile material is polycotton. Preferably, the polyester and cellulose-containing fibers are PET (as the polyester) and cotton (as the cellulose-containing fibers). These are the usual components of polycotton.

In certain embodiments, the polyester and cellulose-containing fibers may be obtained in solid, or substantially solid, form. Alternatively, the composition may be provided in a liquid, or substantially liquid, form, such as in a dissolved form. A combination of these forms is also envisaged since the form of the starting material does not particularly influence the process of the present invention.

In certain embodiments, the mix of polyester and cellulose-containing fibers comprises polyester in an amount of 1 to 99 wt%, preferably 10 to 95 wt%, preferably 30 to 85 wt%, preferably 40 to 80 wt%, preferably 50 to 75 wt%, preferably 60 to 70 wt%, preferably about 65 wt%. In certain embodiments, the compositions comprise cellulose-containing fibers in an amount of 1 to 99 wt%, preferably 10 to 80 wt%, preferably 15 to 65 wt%, preferably 20 to 60 wt%, preferably 25 to 50 wt%, preferably 30 to 40 wt%, preferably about 35 wt%. A typical polycotton contains about 65 wt% polyester and 35% cotton.

### Pre-treatment

In certain embodiments, the obtained polyester and cellulose-containing fibers, such as polycotton, are pre-treated in a pre-treatment step to produce a pre-treated composition comprising polyester and cellulose-containing fibers. In alternative embodiments, the obtained polyester and cellulose-containing fibers will be considered clean enough for the composition comprising polyester and cellulose-containing fibers to be used directly in the process of the present invention without any pre-treatment step.

Preferably, the pre-treatment comprises one or more steps that clean the mixture i.e., by removing any remaining impurities from the composition such as PFAS and other impurities. In certain embodiments, the pre-treatment comprises decolouring the composition, such as decolouring polycotton. Preferably, the pre-treatment comprises a chemical cleaning. The pre-treatment typically takes place in any suitable reactor such as any suitable type of vessel having stirring elements that are able to effectively mix the components into a mixture.

In certain embodiments, the pre-treatment comprises adding one or more cleaning agents to the polyester and cellulose-containing fibers. Any suitable cleaning agent known in the art may be used, but in preferred embodiments the cleaning agent may be selected from one or more of linear, branched or cyclic aliphatic hydrocarbons, alcohols, ketones or organic acids with 2 to 16 carbon atoms, preferably branched or cyclic alcohols, ketones or organic acids with 2 to 12 carbon atoms. Particularly preferred is a cleaning agent comprising one or more cyclic ketones, preferably cycloalkyl ketones, such as cyclohexanone. In certain embodiments, the cleaning agent is added and the mixture is heated to about 100 to 180 °C. In certain embodiments, the pressure inside the reactor is at a maximum of about 1 MPa, preferably between about 0.2 MPa to about 0.3 MPa. The preferred residence time depends on the temperature, with a shorter residence time being required at higher temperatures. For example, a residence time of about 30 seconds to about 10 minutes is preferred when pre-treated at about 155 to about 170 °C. In such a case, the presence of certain impurities can necessitate a longer residence time, in which case the residence time may be at least about 2 minutes, or 3 minutes, or 4 minutes, or 5 minutes and up to about 10 minutes.

The cleaning process is not particularly limited, so long as it removes impurities from the polyester and cellulose-containing fibers. Typically, the cleaning agent functions as a solvent to dissolve various unwanted impurities.

In the same reactor, or a different subsequent reactor, ethylene glycol may be added, preferably as a solvent to assist in removing the cleaning agent. This is necessary since the cleaning agent is loaded with various impurities. Ethylene glycol is added in a sufficient amount in order to replace the cleaning agent. Since the cleaning agent, containing the dissolved impurities will have a lower boiling point than ethylene glycol, the cleaning agent can then be removed easily by distillation. Thus, the cleaning agent should have a lower boiling point than ethylene glycol. Preferably, the cleaning agent and impurities are then separated from the polyester and cellulose-containing fibers so that the cleaning agent can be recovered and reused. This preferably takes place in a slurry distillation column, which can be operated under conditions sufficient to separate the various components, although other methods could also be used. These operating conditions will depend on the components being separated and will be known to a person skilled in the art. Some of the ethylene glycol can then be removed from the cleaned composition by a solid liquid separation step, leaving behind some ethylene glycol to act as a wetting agent. Obtained is a cleaned composition comprising polyester and cellulose-containing fibers (and a certain amount of ethylene glycol). In certain embodiments, some or all of the ethylene glycol added in this step can be recycled ethylene glycol from a later step of the process, such as ethylene glycol recovered during the step of separation the depolymerized polyester product and the cellulose-containing fibers. In alternative embodiments, fresh ethylene glycol is added. It is to be understood that fresh ethylene glycol may be periodically added when necessary due to insufficient amounts of recycled ethylene glycol, for example.

In an alternative embodiment, the composition is pre-treated with a cleaning agent and then, instead of the cleaning agent being removed by distillation, there is an initial step of liquids removal, leaving behind approximately 10% liquids content for example, and a subsequent drying step which removes the cleaning agent. Such a drying step can take place in, for example, a flash dryer. In this alternative embodiment, there is no need to add additional ethylene glycol during the pre-treatment cleaning process. Therefore, in this embodiment, ethylene glycol can be additionally added to the cleaned composition at the end of the pre-treatment cleaning step, while the cleaned composition is being sent to the mechanical treatment step and/or being fed directly to the mechanical treatment step. Ethylene glycol can be added at one or more of these points, as long as there is some ethylene glycol present during at least part, preferably most, most preferably all, of the mechanical treatment. This also applies to embodiments of the invention that do not include a pre-treatment cleaning step, such as a chemical cleaning.

Preferably, the pre-treatment cleaning produces a cleaned composition comprising polyester and cellulose-containing fibers in an amount of at least about 70 wt%, preferably at least about 80 wt%, preferably at least about 85 wt%, preferably at least about 90 wt%, preferably at least about 95 wt%, preferably at least about 99 wt%.

In certain embodiments, the cleaned composition comprises polyester in an amount of 1 to 99 wt%, preferably 10 to 95 wt%, preferably 30 to 85 wt%, preferably 40 to 80 wt%, preferably 50 to 75 wt%, preferably 60 to 70 wt%, preferably about 65 wt%. In certain embodiments, the compositions comprise cellulose-containing fibers in an amount of 1 to 99 wt%, preferably 10 to 80 wt%, preferably 15 to 65 wt%, preferably 20 to 60 wt%, preferably 25 to 50 wt%, preferably 30 to 40 wt%, preferably about 35 wt%. A typical polycotton contains about 65 wt% polyester and 35% cotton. In certain embodiments, the composition further comprises (residual) amounts of ethylene glycol such that the composition fed to the mechanically treating step has an ethylene glycol: polyester weight ratio of about 0.1:1 to about 0.7:1, preferably about 0.2:1 to about 0.4:1.

The cleaned composition can be in any form such as solid, substantially solid, liquid, such as in a dissolved form, or a combination thereof.

It has been found that retaining some ethylene glycol in the composition provides the advantage of wetting the cellulose-containing fibers. In this respect, the ethylene glycol can be thought of as a wetting agent. Reference herein to wetting and a wetting agent refers to a partial soaking of at least the cellulose-containing fibers, although preferably the polyester will also be in a partially soaked form. Advantageously, it has been found that this wetting of the composition avoids grinding of the cellulose-containing fibers, and so the wetting helps to avoid damaging the cellulose-containing fibers. Furthermore, it has been advantageously found that this wetting reduces the shear forces required to mechanically treat the composition in the subsequent step of the process. This avoids further damage to the cellulose-containing fibers, such as burning the fibers (in particular when the fibers are cotton fibers) which can occur at higher temperatures caused by higher shear forces used in extruding the composition, if oxygen has been drawn into the process during addition of the cellulose-containing fibers. A nitrogen blanket environment is used to try to avoid oxygen being drawn into the process. Ultimately, the ethylene glycol helps to enable mechanical treatment of the composition at shear forces that avoid burning the cellulose-containing fibers. Furthermore, the presence of the wetting agent provides excellent mixing, a faster reaction, shorter residence time and better temperature control in the subsequent stages in the process, ultimately resulting in a less complex process. While ethylene glycol in this section refers to 1,2-ethanediol (monoethylene glycol (MEG)), in alternative embodiments it is envisaged that polyethylene glycol (PEG) could be used instead or any other chemical species capable of functioning as a wetting agent in the same manner as ethylene glycol for the cellulose-containing fibers, or any other chemical entity that is able to function in the same manner as ethylene glycol. As will be readily understood, when a slurry distillation process is used in the pre-treatment cleaning there will be some residual ethylene glycol present that wets the composition, but additional ethylene glycol can be added at various other points in the process as explained later herein. When a drying process is used instead in the pre-treatment cleaning to remove the cleaning agent, there will not be any residual ethylene glycol present, so the ethylene glycol will need to be added, at any suitable point in the process, such that there is some ethylene glycol present to act as a wetting agent during the mechanical treatment step.

In certain embodiments, the pre-treatment takes place in a unit that is coupled, preferably directly, with the other units used in the process of the present invention. In alternative embodiments, the pre-treatment unit is decoupled from the other units used in the process of the present invention. In this embodiment, the pre-treatment cleaning units may be decentralized and present in several different locations. The multi-location pre-treatment cleaning units clean the initial feedstock before the cleaned feedstock is then shipped to the centralized other units to be used to carry out the remaining steps in the process, which would be carried out in a continuous manner.

### Mechanical Processing

In the process of the present invention, the composition comprising polyester, cellulose-containing fibers and ethylene glycol is mechanically treated, preferably in a mechanical treatment device. In preferable embodiments some ethylene glycol is added to the composition prior to the start of any mechanical processing, but the present invention also encompasses mechanically treating a composition which does not initially comprise ethylene glycol but instead in which ethylene glycol is first added to the composition during the mechanical treatment. The process of the present invention is only intended to be limited such that there must be some mechanical treatment of a composition comprising polyester, cellulose-containing fibers and ethylene glycol, not that the composition initially fed to the mechanical treatment device must contain some ethylene glycol.

The mechanical treatment processes the composition such that it is possible to heat and to keep under pressure the polyester containing composition at the operating conditions of the depolymerization step. Such a mechanical treatment step is known in the processing of polyester feedstocks to recycle them. Although modified herein, an example is described in WO 2021/122095 A.

In preferred embodiments, the mechanical processing comprises extruding the composition in an extruder. Any suitable extruder may be used to perform the mechanical treatment, but particularly preferred are co-rotating twin screw extruders. In certain embodiments, the composition comprising polyester, cellulose-containing fibers and ethylene glycol is fed from the pre-treatment cleaning step (i.e., the pre-treatment unit) to the extruder. This may be from the pre-treatment cleaning unit itself or another unit used in the pre-treatment cleaning, such as a slurry distillation unit used to remove the cleaning agent. In some embodiments, the composition is fed to the extruder by means of an extruder side feeder. The composition may be fed directly into the extruder by any suitable means, such as via a feed hopper.

Preferably the residence time in the extruder, defined as being the volume of said section divided by the volume flow rate of composition, is less than or equal to 30 minutes, less than or equal to 20, preferably less than or equal to 10 minutes, or preferably less than or equal to 2 minutes. Preferably the residence time in the extruder is greater than or equal to 20 seconds, greater than or equal to 60 seconds, or greater than or equal to 90 seconds.

The extruder is operated under certain temperature and pressure conditions. In certain embodiments, the temperature of the extruder ranges from 130 to 280 °C, preferably from about 140 to 270 °C or from 150 to 260 °C. Preferably the temperature in the extruder is less than or equal to 280 °C, preferably less than or equal to 270 °C or 260 °C or 250 °C or 240 °C or 230 °C or 220 °C. In certain embodiments, this upper temperature limit applies for all key steps, or all steps, of the process when cellulose-containing fibers are present, preferably to avoid burning the cellulose-containing fibers such as cotton. In certain embodiments, different sections of the extruder are operated under different temperature conditions. In certain embodiments, an upstream section (i.e., an initial section) of the extruder is operated under a first temperature, a downstream section (i.e., a mid-section) of the extruder is operated at a second temperature (higher than the first temperature) and a further downstream section (i.e., an end section) of the extruder is operated at a third temperature (lower than the second temperature). By use of the term "mid-section", it is to be understood that the section does not have to represent the midpoint of the extruder but must just be a section of the extruder in between the two respective ends of the extruder. Thus, the temperature in the extruder is increased and subsequently decreased. In certain embodiments, the initial section (i.e., first) temperature is between about 100 to 180 °C, preferably about 120 to 180 °C, or about 130 to 170 °C, or about 140 to 160 °C, most preferably about 150 °C. In certain embodiments, the mid-section (i.e., second) temperature is between about 180 to 300 °C, preferably about 190 to 290 °C, or about 200 to 280 °C, or about 210 to 270 °C, most preferably about 220 to 260 °C. In certain embodiments, there is a temperature increase across the mid-section from about 200 to about 280 °C, preferably from about 210 to 270 °C, or most preferably from about 220 to 260 °C. In certain embodiments, the second temperature is higher than the first temperature by at least about 50 °C, preferably by about 60 °C, or preferably by about 70 °C. In certain embodiments, the third temperature is between about 160 to 250 °C, preferably about 180 to 240 °C, or about 190 to 240 °C, or 190 to 230 °C, most preferably about 220 °C. Preferably, the third temperature is lower than the second temperature, but higher than the first temperature. Preferably, the third temperature is at least about 5 °C lower than the second temperature, or at least about 10 °C lower, or at least about 15 °C lower, or at least about 20 °C lower. Preferably, the third temperature is at least about 30 °C higher than the first temperature, or at least about 40 °C, or at least about 50 °C higher, or at least about 60 °C higher or at least about 70 °C higher. Preferably the temperature is increased across the reactor up until a certain point in the extruder flow path, at which point the temperature is steadily decreased for advantageous processing of the composition in the mechanical treatment unit.

In certain embodiments, the extruder is operated under a pressure of about 300 kPa to about 1200 kPa, preferably about 400 to about 1000 kPa, most preferably about 300 to 800 kPa. In certain embodiments, the pressure is less than about 1000 kPa and preferably this upper pressure limit applies for all key steps, or all steps, of the process when cellulose-containing fibers are present, preferably to avoid burning the cellulose-containing fibers such as cotton.

In certain embodiments, ethylene glycol is added to the composition within the extruder. Preferably, ethylene glycol is added to the composition at a plurality of positions along the extruder. Most preferably, additional ethylene glycol is added to the composition at three different positions along the extruder. However, it is envisaged that it would also be possible to introduce ethylene glycol to the composition at two different positions, or at at least four different places along the extruder - in general the ethylene glycol is added at a plurality of positions along the extruder. In certain embodiments, the addition of ethylene glycol comprises an upstream addition of ethylene glycol, in one or more places along the extruder, and a downstream addition of ethylene glycol at one or more places along the extruder. The upstream addition of ethylene glycol may be introduced at one or more places but preferably in two different places along the extruder and is added to ensure that the composition is sufficiently wetted (as described earlier herein), so that sufficiently low shear forces can be used in the extruder to avoid damaging the cotton. This is entirely optional, however, since there may already be enough residual ethylene glycol already present within the composition from the pre-treatment of the composition for there to be sufficient wetting. As already partially described herein, the presence of ethylene glycol in the extruder in suitable amounts has been found to be particularly advantageous.

It has been identified that it is advantageous to control the amount of ethylene glycol that is present within the upstream part of the extruder of the present process (be it from the residual ethylene glycol from the pre-treatment step or from the upstream additional ethylene glycol added to the composition in the extruder). In certain embodiments, the amount of ethylene glycol present in the upstream part of the extruder is controlled such that the weight ratio of ethylene glycol in the upstream part of the extruder to initially fed polyester is between about 0.1:1 to 3:1, or about 0.3:1 to 2.3:1, preferably between about 0.5:1 to 2:1, most preferably about 1:1 to 2:1. Preferably the amount of ethylene glycol in the upstream part of the extruder should be controlled such that the weight ratio of ethylene glycol in the upstream part of the extruder to initially fed polyester is less than about 2.5:1, preferably less than about 2:1 or less than about 1.5:1. Initially fed polyester referred to herein refers to the amount of polyester added to the process in the initial feed comprising polyester and cellulose-containing fibers in each process cycle (e.g., polycotton feed). Maintaining the level of ethylene glycol below these thresholds has been found to be important in order to avoid breaking the "melt" sealing present in the extruder. Should such sealing be broken, by the composition having too much wetting and being too much in a fluid state, the extruder would not function properly. In such a scenario, the composition would not flow properly downstream the extruder. In certain embodiments therefore, the amount of ethylene glycol present upstream may be defined as an amount sufficient to avoid burning and damaging the cellulose-containing fibers but sufficiently low to avoid breaking the melt seal. It is furthermore advantageous to minimize the amount of ethylene glycol required since then a smaller extruder could be used which reduces costs.

While both the cellulose-containing fibers, such as a cotton, and the polyester will absorb the ethylene glycol, only a small amount of polyester will absorb the ethylene glycol, whereas the cotton will absorb a lot of ethylene glycol. This, together with the relatively short residence time, ensures that the polyester is degraded in the extruder only to a small extent, while the sufficiently wetting the cotton. Preferably, no depolymerization catalyst is added in the upstream part of the extruder to avoid significant depolymerization of the polyester.

In certain embodiments, there is a downstream addition of ethylene glycol in the extruder, which comprises adding additional ethylene glycol to the composition at a downstream part of the extruder. The downstream addition may take place in addition to the upstream addition, or there may only be a downstream addition. It has been advantageously found that higher amounts of ethylene glycol can be added in the downstream part of the extruder without breaking the melt sealing of the extruder. Therefore, ethylene glycol is added in the downstream addition such that the weight ratio of ethylene glycol in the downstream part of the extruder to initially fed polyester is between about 3:1 to 7:1, or about 3.5:1 to 6:1, preferably between about 4:1 to 5:1, most preferably about 4:1. Thus, preferably in the process there is a higher amount of ethylene glycol downstream than upstream in the extruder. In certain embodiments, in the downstream part of the extruder because of the increased amount of ethylene glycol present, partial depolymerization of the polyester may take place. This depolymerization process proceeds via glycolysis and is known in the art. In the depolymerization, the polyester is converted into its respective monomer and/or oligomer units. When the polyester is PET, the glycolysis with ethylene glycol produces bis-(2-hydroxyethyl) terephthalate (BHET) and/or its oligomers. In certain embodiments, in the downstream part of the extruder, at least 10 wt% of the polyester is depolymerized, or at least 20 wt%, or at least 30 wt%, or at least 40 wt%, or at least 50 wt%, or at least 60 wt%, or at least 70 wt%, or at least 80 wt%, or at least 90 wt% is depolymerized. The additional amount of ethylene glycol added downstream helps to reduce production of oligomers in the process, and favours instead the production of more of the desired monomer. In certain embodiments, substantially complete, complete or at least sufficient depolymerization can take place within the extruder itself if sufficient ethylene glycol is added and under sufficient conditions. In this embodiment, the necessity of having a subsequent depolymerization reactor can be avoided, thus saving costs by reducing the equipment required. In this embodiment, a depolymerization catalyst may be added at the same time as the ethylene glycol in the downstream part of the extruder in order to achieve sufficient depolymerization by accelerating this process. Alternatively, the depolymerization catalyst can be added at different places to the ethylene glycol in a downstream part of the extruder. In certain embodiments, the depolymerization catalyst is added in an amount of 1 to 10 wt% based on the amount of polyester. The depolymerization catalyst is discussed in more detail in the depolymerization section.

Preferably most of, or the entirety of, the mechanical treatment step is conducted under an inert atmosphere e.g., under nitrogen. Preferably, the material feed (i.e., the composition) is fed to the extruder under an inert, preferably nitrogen, atmosphere.

Preferably, the mechanical treatment device is an extruder, although other alternative mechanical devices may be used. This is because the use of an extruder enables enough pressure to be built up for liquid separation to take place in a subsequent step in a separation device such as a plug screw separator. The use of an extruder can eliminate the need to use a vortex pump downstream, which requires a liquid content of 70 to 80 % (saturated polyester/cellulose-containing fibers plus 70 to 80% free liquid). In alternative embodiments, this could usually only be avoided by the additional use of a discharge device that can build up pressure, e.g. with a discharge screw, which is disadvantageous because it introduces an additional step and an additional unit into the process.

In summary, controlling the amount of ethylene glycol in the extruder, helps to enable the co-processing of the polyester and cellulose-containing fibers in an optimal way. Maintaining an amount of ethylene glycol initially (i.e., wetting) helps to decrease the shear forces required to the process the composition without burning and damaging the cotton, but this amount must be kept sufficiently low in order to avoid breaking the melt seal. In particular, pressure stabilization across the process can be important and this is factored into the amount of ethylene glycol added throughout the process. Preferably, there is a pressure holding device in the process which helps to maintain and adjust the pressure across the system, together with the regulated addition of ethylene glycol. Later on in the extruder, higher amounts of ethylene glycol can be added since breaking the melt seal is no longer an issue, in order to partially depolymerize the polyester. Having a plurality of positions at which ethylene glycol can be added to the composition within the extruder helps to ensure control of this by allowing portion-wise addition of the ethylene glycol.

The total ethylene glycol content is defined as the total amount of ethylene glycol added during the process, i.e., to the mechanical treatment unit and depolymerization unit (including any ethylene glycol contained in the fed from the pre-treatment). Preferably up to about 5 wt% of the total ethylene glycol content is added to the extruder from the pre-treatment cleaning step i.e., in the composition fed from the pre-treatment. Preferably up to about 20 wt% of the total ethylene glycol content is added directly to the extruder in the upstream part of the extruder, most preferably up to about 15 wt% or up to about 10 wt%. Preferably up to about 40 wt% of the total ethylene glycol content is added directly to the extruder in the downstream part of the extruder, more preferably up to about 30 wt% or up to about 25 wt%. Preferably, the remaining portion of the total ethylene glycol content is added directly to the depolymerization unit, as described later herein. In cases where no depolymerization unit is required, then the remaining portion of the total ethylene glycol content is added directly to the downstream part of the extruder.

As is explained later on, in certain embodiments the ethylene glycol added is fresh ethylene glycol. Preferably, however, at least a portion of the ethylene glycol that is added is recycled from a downstream step of the process.

In alternative embodiments, a masher may be used as the mechanical treatment device instead of an extruder. A masher is known in the art and can be twin screw or single screw. A masher is typically described as a dynamic mixer or dynamic mixing unit. The masher preferably includes a screw discharge device, which enables pressurization up to about 1000 kPa. In this embodiment, the entire reaction, i.e., depolymerization, takes place in a subsequent plug-flow reactor during which the reaction mixture is heated to about 190 to 220 °C. The device is preferably positioned at an elevated height in order to provide additional static pressure. An advantage of using a masher instead of an extruder would be the particularly soft treatment of the cotton, which can be driven by using very low temperatures in the masher of about 130 to 170 °C, preferably 140 to 160 °C. Furthermore, there are lower shear forces than in an extruder and it also helps to maintain the cellulose-containing fiber length. An extruder can, however, be preferred since a masher requires a vortex booter pump to be used together with the masher in order to produce sufficient pressures to process the composition, to reach greater than about 300 kPa, preferably greater than about 1000 kPa, and it can also require more equipment and cost to run.

### Depolymerization

In the process of the present invention, the polyester in the composition is depolymerized to produce a depolymerized polyester product by contacting the composition with a depolymerizing agent. Depolymerization by breaking down the ester bond present within the polyester and reducing the polymer into its monomer and/or oligomer components. Breaking the polyester down to the monomer and/or oligomer components is required in order for the polyester to be recycled and subsequently converted into new, useful articles. Herein the depolymerization takes place by glycolysis.

As explained herein, in certain embodiments depolymerization can take place during the mechanical treatment of the composition in, for example, an extruder due to the increased amount of ethylene glycol (and optionally depolymerization catalyst) across the mechanical treatment unit, such as an extruder, causing glycolysis of the polyester. In these embodiments, sufficient depolymerization can take place in the mechanical treatment step or partial depolymerization can take place and thus a subsequent additional depolymerization after mechanically treating the composition is required. As explained herein in relation to the mechanical treatment step, in certain embodiments sufficient depolymerizing agent can be added during the mechanical treatment step in order to sufficiently depolymerize the polyester, thus avoiding the need for any subsequent additional depolymerizing step. In alternative embodiments, a subsequent depolymerization step is required in order to achieve sufficient depolymerization of the polyester. Preferably, additional depolymerization takes place in a depolymerization unit, otherwise solely relying on the mechanical treatment unit can result in a too large quantity of oligomers in the depolymerized polyester product. Furthermore, in order to add sufficient quantities of ethylene glycol a large mechanical treatment unit is required and so it can be advantageous to have both a mechanical treatment unit and a depolymerization unit in order to avoid needing to operate a very large extruder, for example.

When an additional depolymerization step is required, this takes place in a depolymerization reactor. Suitable depolymerization reactors will be readily apparent to a person skilled in the art, but there should not be a mixing element due to the presence of the cotton. Particularly preferred is a plug flow reactor. Such reactors are known in the art for use in depolymerizing polyester. An example of such a plug flow reactor and method of operation suitable for the present process is described in, for example, JP 2004196880 A. Thus, preferably the depolymerization reactor does not have stirring and/or mixing elements - due to the presence of cotton and this differs from such depolymerization reactors used in, for example, WO 2021/122095 A. In certain embodiments, the plug flow reactor is operated at a temperature of about 180 to 220 °C, preferably about 190 °C. Preferably the residence time is between about 1 minute to 5 minutes. Preferably, the same pressure is maintained as in the extruder e.g., up to 1200 kPa. Preferably, the remaining portion of the total ethylene glycol content is added to directly to the depolymerization unit, as described later herein. This is usually about 50 wt% or more. Further preferably, ethylene glycol is added in an amount such that the ethylene glycol present in the system is up to about 8:1, preferably up to about 7:1, or between about 1:1 to 8:1 or 2: 1 to 6: 1 relative to the amount of polyester initially fed into the system, on a weight basis.

The depolymerization agent comprises components capable of depolymerizing a polyester. These components are known in the art. In preferred embodiments, the depolymerization agent comprises an alcohol and/or a depolymerization catalyst. The alcohol may be selected from one or more of 1,2-ethanediol (monoethylene glycol (MEG)), polyethylene glycol (PEG), 1,3-propanediol (trimethylene glycol), 1,4-butanediol (tetramethylene glycol), and 1,5-pentanediol (pentylene glycol), further preferably wherein the alcohol is ethylene glycol (1,2-ethanediol (monoethylene glycol)).

In embodiments wherein the depolymerization agent comprises ethylene glycol, it is to be understood that the process requires the addition of ethylene glycol initially to "wet" the composition and a subsequent addition in order to depolymerize the polyester. Typically, the addition of ethylene glycol prior to the mechanical treatment step and/or upstream in the extruder wets the composition and is in an insufficient quantity to substantially depolymerize the polyester and the subsequent addition in the downstream part of the extruder and/or depolymerization reactor is in sufficient quantities to substantially depolymerize the polyester. By substantial depolymerization of the polyester, this means depolymerization of at least 5 wt% of the polyester, preferably at least 10 wt% of the polyester.

In most cases purely ethylene glycol is not enough to sufficiently depolymerize the polyester and a depolymerization catalyst is required. In preferred embodiments, the depolymerization catalyst is added to the extruder and/or the depolymerization reactor. In certain embodiments, the depolymerization catalyst is added in an amount of about 1 to 20 wt%, preferably about 2 to 15 wt% based on the feed amount of polyester. Any suitable depolymerization catalyst may be used, such as one or more amine organocatalyst, preferably selected from one or more of tetramethylenediamine (TMEDA), pentamethyldiethylenetriamine (PMDETA), trimethyl triaza cyclononane (TACN), trialkylamine, 4-(N,N-dimethylamino)pyridine (DMAP), 1,4-diazabicyclo (2,2,2)octane (DABCO), N-methyl imidazole (NMI), and combinations thereof. Preferably sufficient depolymerization agent (e.g., ethylene glycol and depolymerization catalyst) is added in order to depolymerize the polyester to predominantly monomers and to minimize the formation of oligomers.

Preferably, the depolymerization step produces a composition comprising a depolymerized polyester product. Preferably, this product comprises monomers and oligomers, wherein most preferably the monomer content is as high as possible. Preferably, the product comprises bis(2-hydroxyethyl)terephthalate (BHET), most preferably comprises substantially bis(2-hydroxyethyl)terephthalate (BHET) or consists of bis(2-hydroxyethyl)terephthalate (BHET). In such a case the polyester is poly(ethyleneterephthalate) (PET). Also present together with the depolymerized polyester product will be one or more of (usually all of) cellulose-containing fibers, ethylene glycol and depolymerization catalyst.

### Separation

In certain embodiments, the process further comprises a step of separating the depolymerized polyester product from the cellulose-containing fibers in a plug screw separator, preferably wherein the operating pressure of the plug screw separator is lower than the feed pressure. Although not a term used typically in the art, a "plug screw separator" herein is used to refer to a "plug screw feeder", which is known in the art, particularly in the paper-making industry. A different terminology is used in the present case, since the plug screw feeder is operated in a reverse manner compared to a typical paper-making process. In this respect, usually the feed pressure is very low, around 0 kPa, and the plug screw feeder has the task of increasing the pressure for further processing. However, in the present case it has been surprisingly found that the plug screw feeder can be operated, essentially in a reverse manner, in order to function as a separator. Therefore, in the present process, the feed pressure is higher, at about 600 kPa to 1000 kPa and the pressure is then reduced as ethylene glycol and depolymerized polyester (and depolymerization catalyst) are removed.

In alternative embodiments, the process further comprises a step of separating the depolymerized polyester product from the cellulose-containing fibers using a different type of separation unit. In this respect, separation may take place in a fluid cyclone. In further alternative embodiments, separation may take place in a decanter centrifuge.

In the step of separating the depolymerized polyester product from the cellulose-containing fibers, at least a portion of the depolymerized polyester product is separated from the cellulose-containing fibers. This enables the two components to then be isolated and prepared downstream for subsequent reuse and/or reprocessing. Preferably, this step further comprises separating one or more of the ethylene glycol, depolymerization catalyst and impurities from the depolymerized polyester produced and/or the cellulose-containing fibers.

In alternative embodiments, the separation unit may be any other suitable unit for separating the cellulose-containing fibers from the polyester, such as a twinroll press or a hydro/fluid cyclone.

Preferably, the separator separates the composition into at least a predominantly soaked cellulose-containing fibers (such as cotton) stream, and a liquid stream containing the depolymerized polyester product. In preferred embodiments, the cellulose-containing fibers are substantially or entirely removed at this step in the process to be further processed downstream for reuse e.g., as cotton. Preferably, the liquid stream is further separated into an inner return stream, which recycles ethylene glycol back to an earlier stage in the process and a depolymerized polyester product stream which is sent downstream for further processing.

In preferred embodiments, ethylene glycol is recycled in the process. In certain embodiments, ethylene glycol that has not been used up in the process is returned after the separation step to one or more upstream steps in the process. Preferably, ethylene glycol is recycled to one or more of the pre-treatment cleaning step/unit, the mechanical treatment step/unit and the depolymerization step/unit. Preferably, the ethylene glycol is recycled to the mechanical treatment unit, such as an extruder, at one or more places along the mechanical treatment unit. Recycling of the ethylene glycol has been found to lead to a more economical process, since less fresh ethylene glycol is required. In certain embodiments, the inner return streams further comprise some depolymerized polyester product such as monomers and/or oligomers.

Preferably, there is an inner return stream and an outer return stream. Preferably, as described earlier, directly after the separation step ethylene glycol is recycled from the liquid stream, to upstream in the process, in what is described herein as the inner return stream. Preferably, in the remaining portion of the liquid stream that is not recycled, the depolymerized polyester product stream is subject to further downstream processing steps in order to process the depolymerized polyester product for reuse i.e., to be condensed back into polyester in a polymerization process. Such processing steps are known in the art e.g., purification steps. Preferably, the depolymerized polyester product stream also comprises some residual ethylene glycol and preferably at least a portion of this ethylene glycol is recycled from one or more processing steps downstream of the separator. This recycle line is referred to herein as the outer return stream. The outer return stream does not comprise substantial amounts, preferably does not contain any, of the depolymerized polyester product since the product will have been separated from the ethylene glycol in the downstream processing. In certain embodiments, both return streams contain ethylene glycol in an amount of about 3:1 to 5:1 relative to the amount of polyester (PET) contained in the feed fed into the process (i.e., 3 to 5 times the wt% of initially fed polyester). Preferably, both return streams contain ethylene glycol in an amount of about 4:1 relative to the amount of polyester (PET) contained in the feed fed into the process (i.e., 4 times the wt% of initially fed polyester).

In preferred embodiments, a mix of fresh ethylene glycol and recycled ethylene glycol is used in the process. Preferably, a mix of about 40-60 wt% fresh ethylene glycol is used together with approximately 40-60 wt% recycled ethylene glycol, preferably about 50/50 wt%.

### Products

In certain embodiments, following separation in the separation unit, the depolymerized polyester product and/or the cellulose-containing fibers are further processed downstream in accordance with methods known in the art in order to make them suitable for reuse. Such processes include steps such as removing impurities (purification), converting the products into forms more suitable for use, modifying or adjusting the content of various components in the products etc. Various steps of recovering and reactivating the depolymerization catalyst may also be performed. In certain embodiments, the depolymerized polyester product is re-polymerized under conditions suitable for polymerization to form a recycled polyester product.

After the separator separates cellulose-containing fibers, such as cotton, this can then be removed from the process and post-treated in order to prepare it for recycled use. After or directly after the separator step there can be a subsequent step of catalyst recovery, in which the depolymerization catalyst is recovered. Subsequently there can be one or more cleaning steps, in which various impurities are removed. In order to obtain the depolymerized polyester product in a final purified form, preferably, the product is then subject to one or more of the following: purification and/or solidification, solid/liquid separation, cleaning and/or drying.

In certain embodiments, the polyester is selected from the group consisting of poly(ethyleneterephthalate) (PET), poly(butylene terephthalate) (PBT), polytrimethylene terephthalate (PTI), polyethylene naphthalate (PEN), polyethylene furanoate (PEF), and combinations thereof, preferably wherein the polyester is poly(ethyleneterephthalate) (PET).

In certain embodiments, the depolymerized polyester product comprises monomers and/or oligomers of the polyester, preferably one or more of bis(2-hydroxyethyl)terephthalate (BHET) and 2-Hydroxyethyl terephthalic acid (MHET). Most preferably, the depolymerized polyester product is or comprises bis(2-hydroxyethyl)terephthalate (BHET).

The end use of the depolymerized polyester product and the recycled cellulose-containing fibers is not particularly limited and the aim is to have the same, or substantially similar, quality as the virgin product.

In certain embodiments, the depolymerized polyester product, preferably BHET, is recycled and/or reused as fibers, for example, for the production of clothing, textiles, films, foils, bottles and the like.

In certain embodiments, the recycled cellulose-containing fibers, preferably cotton, are recycled and/or reused as clothing, non-woven items for hygiene, wipes, interlinings and the like.

The order of the steps of the processes described herein is exemplary (unless a certain order is necessitated through the explicit wording of the steps), but the steps may be carried out in any suitable order, or simultaneously where appropriate. Additionally, steps may be added or substituted in, or individual steps may be deleted from any of the processes without departing from the scope of the subject matter described herein.

It will be understood that the description of preferred embodiments herein is given by way of example only and that various modifications may be made by those skilled in the art. What has been described above includes examples of one or more embodiments. It is, of course, not possible to describe every conceivable modification and alteration of the above process and apparatus for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A method comprising:
providing a composition comprising polyester and cellulose-containing fibers;
adding ethylene glycol to the composition;
mechanically treating the composition comprising polyester, cellulose-containing fibers and ethylene glycol;
depolymerizing the polyester in the at least partially mechanically treated composition comprising adding a depolymerizing agent to produce a composition which comprises a depolymerized polyester product and cellulose-containing fibers;
and
preferably separating in a separation unit the depolymerized polyester product from the cellulose-containing fibers.

2. The method of claim 1, further comprising a step of pre-treating the composition before mechanically treating the composition, including reacting the composition with a cleaning agent, preferably under one or more of the following conditions:
a temperature of about 100 to about 180 °C;
a pressure of up to about 1 MPa;
a residence time of about 30 seconds to about 10 minutes when pre-treated at about 155 to about 170 °C;
a residence time of about 4 to about 10 minutes when pre-treated at about 130 to about 150 °C; and
a residence time of about 15 to about 45 minutes when pre-treated at about 100 to about 125 °C.

3. The method of claim 2, wherein the pre-treating step further comprises adding ethylene glycol to the composition and removing the cleaning agent from the composition such that at least some of the ethylene glycol remains in the composition.

4. The method of any preceding claim, wherein adding ethylene glycol takes place at least while mechanically treating the composition, preferably in addition to adding ethylene glycol to the composition prior to the mechanically treating step.

5. The method of any preceding claim, wherein the composition fed to the mechanically treating step comprises an ethylene glycol: polyester weight ratio of about 0.1:1 to about 0.7:1, preferably about 0.2:1 to about 0.4:1.

6. The method of any preceding claim, wherein mechanically treating the composition comprises extruding the composition in an extruder, preferably further comprising adding ethylene glycol to the composition at a plurality of places along the extruder.

7. The method of claim 6, comprising adding ethylene glycol at one or more places upstream in the extruder so that the ethylene glycol content is about 0.2:1 to about 2:1 relative to the amount of feed polyester on a weight basis and adding ethylene glycol at one or more places downstream in the extruder so that the ethylene glycol content is about 4:1 to about 5:1 relative to the amount of feed polyester on a weight basis.

8. The method of claims 6 or 7, further comprising heating the composition upstream in the extruder to a first temperature, preferably of about 130 to about 170 °C, and subsequently heating the composition downstream in the extruder to a second temperature which is higher than the first temperature, preferably of about 200 to about 280 °C.

9. The method of claim 8, wherein the composition is cooled further downstream in the extruder to a third temperature, higher than the first temperature and lower than the second temperature, preferably of about 190 to about 230 °C.

10. The method of any preceding claim, wherein depolymerizing comprises partially or completely depolymerizing the polyester by adding depolymerizing agent while mechanically treating the composition; and/or
wherein depolymerizing comprises depolymerizing the polyester by adding depolymerizing agent in a depolymerization reactor after mechanically treating the composition, preferably wherein the depolymerization reactor is a plug flow reactor.

11. The method of claim 10, wherein depolymerizing in the depolymerization reactor
comprises one or more of the following:
depolymerizing in the reactor for a time of between about 1 to about 20 minutes;
depolymerizing in the reactor at a pressure of about 300 to about 1200 kPa; and
depolymerizing at a temperature of about 170 to about 240 °C.

12. The method of any preceding claim, wherein the depolymerizing agent comprises an alcohol, preferably wherein the alcohol is selected from the group consisting of ethylene glycol, polyethylene glycol (PEG), 1,3-propanediol (trimethylene glycol), 1,4-butanediol (tetramethylene glycol), 1,5-pentanediol (pentylene glycol) and combinations thereof, further preferably wherein the depolymerizing agent comprises additionally added ethylene glycol; and/or
wherein the depolymerizing agent comprises a depolymerization catalyst, preferably wherein the catalyst is selected from an amine organocatalyst, preferably wherein the amine organocatalyst is selected from the group consisting of tetramethylenediamine (TMEDA), pentamethyldiethylenetriamine (PMDETA), trimethyl triaza cyclononane (TACN), trialkylamine, 4-(N,N-dimethylamino)pyridine (DMAP), 1,4-diazabicyclo (2,2,2)octane (DABCO), N-methyl imidazole (NMI), and combinations thereof.

13. The method of any preceding claim, further comprising separating the depolymerized polyester product from the cellulose-containing fibers in a plug screw separator, preferably wherein the operating pressure of the plug screw separator is lower than the feed pressure.

14. The method of any preceding claim, further comprising a step of returning a stream containing ethylene glycol from downstream to one or more of the mechanical treatment, depolymerization, and pre-treatment cleaning steps, preferably comprising an inner return stream directly from the separating unit and an outer return stream from further downstream.

15. The method of any preceding claim, wherein the polyester is poly(ethyleneterephthalate) (PET) and the depolymerizing agent comprises additionally added 1,2-ethanediol (ethylene glycol) and catalyst, and the depolymerized polyester product comprises bis(2-hydroxyethyl)terephthalate (BHET).
